# EUROPÄISCHE PATENTANMELDUNG

(11) **EP 3 715 987 A1**
(43) Veröffentlichungstag der Anmeldung: **30.09.2020**
(21) Anmeldenummer: 19000158.6
(22) Anmeldetag: 29.03.2019
(51) Int. Cl.: G05B 23/02

(54) **VERFAHREN UND SYSTEM ZUM MANAGEMENT VON MELDUNGEN EINES AUTOMATISIERUNGSSYSTEMS**

(71) Anmelder: Siemens Aktiengesellschaft, 80333 München (DE)
(72) Erfinder: Die Erfindernennung liegt noch nicht vor

(57) **Zusammenfassung**

Zum Management von Meldungen (M) eines Automatisierungssystems (2), welches ein Meldesystem (9) zur Erzeugung von Meldungen (M) und zumindest eine erste Mensch-Maschine-Schnittstelle (10) umfasst, auf der die Meldungen (M) zur Anzeige gebracht werden, und wobei das Meldesystem (9) kommunikativ mit der Mensch-Maschine-Schnittstelle (10) verbunden ist, sind zumindest eine erste Kategorie (A) und eine zweite Kategorie (B) von Meldungen definiert und die Meldungen (2) des Automatisierungssystems (2) sind jeweils zumindest einer der zwei Kategorien (A, B) zugeordnet. Es wird eine Funktion (45) angewendet zumindest auf Eingangsdaten (B1,B2,B3,A1), die Meldungen (M) repräsentieren, die der zweiten Kategorie (B) zugeordnet sind und die auf der ersten Mensch-Maschine-Schnittstelle (10) zur Anzeige gebracht werden. Die Funktion (45) wurde von einem Algorithmus aus dem Bereich des maschinellen Lernens trainiert und erzeugt Ausgangsdaten (A1 bzw. A2), die eine Meldung (M) des Automatisierungssystems (2) repräsentieren, die der ersten Kategorie (A) zugeordnet ist. Die Meldung (M), die durch die Ausgangsdaten (A1 bzw. A2) repräsentiert wird, wird auf einer zweiten Mensch-Maschine-Schnittstelle (30) zur Anzeige gebracht, wobei die zweite Mensch-Maschine-Schnittstelle (30) kommunikativ von dem Meldesystem (9) getrennt ist.

## Beschreibung

Die Erfindung betrifft ein Verfahren und ein System zum Management von Meldungen eines Automatisierungssystems, insbesondere einer industriellen Anlage, gemäß Patentanspruch 1 bzw. 8. Die Erfindung betrifft ferner ein Auswerteverfahren und ein Auswertesystem gemäß Patentanspruch 6 bzw. 13 und ein Programm und eine Computerprogrammprodukt gemäß Patentanspruch 15 bzw. 16.

Automatisierungssysteme dienen zur Überwachung, Steuerung, und/oder Regelung von mobilen und stationären Einrichtungen und Anlagen und ermöglichen einen Betrieb von Steuerungseinrichtungen, Sensoren, Maschinen und industriellen Anlagen, der möglichst selbständig und unabhängig von menschlichen Eingriffen erfolgen soll.

Automatisierungssysteme kommen beispielsweise im Bereich der industriellen Produktion, der Energieerzeugung undverteilung, des Gebäudemanagements, der Logistik, der Antriebstechnik etc. zum Einsatz. Sie erzeugen häufig eine Vielzahl von Meldungen für z.B. Betriebs- und Wartungspersonal des Systems. Diese Meldungen werden dem Personal üblicherweise auf einer Mensch-Maschine-Schnittstelle (HMI), z.B. einer Operator Station, einem PC oder einem tragbaren kommunikationsfähigem Gerät wie z.B. einem Tablet oder Smartphone zur Anzeige gebracht. Sie sollen die Aufmerksamkeit des Personals auf Änderungen des Zustandes der Einrichtung oder Anlage lenken, die möglicherweise dessen Eingreifen erfordern.

Oftmals beziehen sich diese Meldungen auf bestimmte Ereignisse in dem Automatisierungssystem. Eine Meldung kann beispielsweise eine Alarm-Meldung oder eine Hinweis-Meldung sein. Eine Alarm-Meldung ist eine Meldung, dass ein Fehler oder ein abnormales Ereignis eingetreten ist und das Personal zeitnah Maßnahmen einleiten muss. Eine Hinweis-Meldung kann beispielsweise auf eine Notwendigkeit einer Wartung hinweisen. Die Ereignis-Meldung kann dabei Text und weitere Informationen wie z.B. Zeitpunkt und Ort der Erzeugung der Meldung umfassen.

Die Meldungen werden üblicherweise von einem Meldesystem erzeugt, dass mit der Mensch-Maschine-Schnittstelle (HMI) kommunikativ, z.B. über ein Kommunikationsnetzwerk, in Verbindung steht.

Industrielle Anlagen kommen in verschiedensten Industriesektoren zum Einsatz, zum Beispiel in der Energieerzeugung, der Prozess-Industrie (z.B. Papier, Chemie, Pharma, Metall, Öl- und Gas) und der diskreten Fertigungsindustrie. Der eigentliche branchenspezifische Prozess, z.B. Energieerzeugungs- oder Produktionsprozess, wird dabei durch das Automatisierungssystem gesteuert und/oder geregelt. Ein Automatisierungssystem ohne die Feldgeräte (d.h. ohne Aktoren und Sensoren) wird häufig auch als "Prozessleitsystem" bezeichnet.

Das Meldesystem ist dann häufig als eine Funktion in einem sogenannten "Operator-System-Server" oder "Anwendungs-Server" realisiert, in dem ein oder mehrere anlagenspezifische Anwendungsprogramme gespeichert sind und beim Betrieb der Anlage zur Ausführung gebracht werden.

In einer komplexen industriellen Anlage (z.B. einer Papierfabrik) werden von dem Meldesystem unter Umständen hunderte von Meldungen pro Minute erzeugen. Viele der Meldungen sind durchaus wichtig, um eine mögliche Anomalie anzuzeigen, aber nicht alle haben die gleiche Auswirkung auf den Betrieb des Prozesses. So kann es passieren, dass der Betreiber der Anlage mit Alarm-Meldungen überflutet wird und hierdurch nicht in der Lage ist, angemessen auf die wirklich wichtigen Alarme zu reagieren. Manchmal können bis zu 80% der Meldungen eigentlich vom Bedien-/Beobachtungspersonal ignoriert werden, aber das Herausfiltern der wichtigen, ggf. für die Anlage kritischen, Meldungen erfordert viel Jahre an Erfahrung. Selbst wenn der Betreiber sehr schnell einen wichtigen Alarm herausfiltert, verbleibt aber oft zu wenig Zeit für geeignete Gegenmaßnahmen. Dies kann zu Anlagenstillstand und Produktionsausfällen führen.

Zur Bewältigung der Flut von Meldungen sind schon einige Lösungsansätze bekannt. So offenbart beispielsweise die EP 3 187 950 A1 ein Verfahren zum Managen von Alarmen in einem Steuerungssystem für einen industriellen Prozess. Das Steuerungssystem umfasst ein Meldesystem mit einem Benachrichtigungs-Server zur Erzeugung von Alarmmeldungen basierend auf vorgegebenen Benachrichtigungserzeugung-Kriterien, eine Bediener-Station, die in Kommunikation mit dem Server ist, und eine Datenbank mit historischen Alarmdaten. Dabei werden in dem Benachrichtigungs-Server historische Alarm-Daten empfangen, eine erste Gruppe von Alarmen als "wichtige Alarme" und eine zweite Gruppe von Alarmen als "weniger wichtige Alarme" auf Basis vorbestimmter Regeln definiert. Es werden eine Vielzahl von historischen Datensegmenten in den historischen Alarm-Daten identifiziert, wobei jedes dieser Datensegmente zumindest eine Alarm-Nachricht eines Alarms der ersten Gruppe beinhaltet. Weiterhin werden eine Vielzahl von Association Scores bezüglich der Vielzahl von Alarmen der zweiten Gruppe ermittelt, und abschließend ein vorgegebenes Benachrichtigungserzeugungs-Kriterium für die Alarme auf Basis der Vielzahl von Association Scores modifiziert. Durch Modifikation der Benachrichtigungserzeugung werden weniger wichtige Alarme der zweiten Gruppe priorisiert oder unterdrückt. Außerdem können auf Basis der Association Scores der weniger wichtigen Alarme der zweiten Gruppe wichtige Alarme der ersten Gruppe zusammen mit einem vermuteten Zeitraum ihres Auftretens vorhergesagt werden.

Außerdem ist es bereits bekannt, neuronale Netze zur Vorhersage von Alarmen bzw. eines drohenden Ausfalls von Komponenten einzusetzen.

Die bekannten Systeme zielen vor allem auf Änderungen der Regeln für die Erzeugung der Alarme, d.h. auf Änderungen des Meldesystems selbst. Oftmals hat ein Betreiber eines Automatisierungssystems aber überhaupt keine Möglichkeit, in das Alarmsystem bzw. in dessen Regeln einzugreifen. Selbst wenn er diese Eingreifmöglichkeit hat, ist dieser Eingriff aber komplex, fehleranfällig und es besteht die Gefahr (ggf. sicherheitsrelevanter) Rückwirkungen auf das restliche Automatisierungssystem. Dies gilt vor allem auch dann, wenn sich der Benachrichtigungs-Server entfernt von der Anlage auf einer Cloud befindet und über ein öffentliches Kommunikationsnetzwerk mit dem Automatisierungssystem verbunden ist.

Es ist deshalb Aufgabe vorliegender Erfindung, ein Verfahren und ein System zum Management von Meldungen eines Automatisierungssystems, insbesondere einer industriellen Anlage, anzugeben, mit dem die vorgenannten Nachteile und Probleme vermieden werden können.

Die Lösung dieser Aufgabe gelingt durch ein Verfahren und ein System zum Management von Meldungen eines Automatisierungssystems, insbesondere einer industriellen Anlage, gemäß Patentanspruch 1 bzw. 8. Ein Auswerteverfahren und ein Auswertesystem hierfür sind Gegenstand der Patentansprüche 6 bzw. 13. Ein Programm und eine Computerprogrammprodukt sind Gegenstand der Patentansprüche 15 bzw. 16. Vorteilhafte Ausgestaltungen sind jeweils Gegenstand der Unteransprüche. Das erfindungsgemäße Verfahren geht aus von einem Automatisierungssystem, welches
- ein Meldesystem zur Erzeugung von Meldungen und
- zumindest eine erste Mensch-Maschine-Schnittstelle umfasst, auf der die Meldungen zur Anzeige gebracht werden,
   und wobei
- das Meldesystem kommunikativ, insbesondere über ein Kommunikationsnetzwerk des Automatisierungssystems, mit der Mensch-Maschine-Schnittstelle verbunden ist,
- zumindest eine erste Kategorie und eine zweite Kategorie von Meldungen definiert sind und wobei die Meldungen des Automatisierungssystems jeweils zumindest einer der zwei Kategorien zugeordnet sind,
- eine Funktion angewendet wird zumindest auf Eingangsdaten, die Meldungen repräsentieren, die der zweiten Kategorie (optional zusätzlich auch solche der ersten Kategorie) zugeordnet sind und die auf der ersten Mensch-Maschine-Schnittstelle zur Anzeige gebracht werden, wobei die Funktion von einem Algorithmus aus dem Bereich des maschinellen Lernens trainiert wurde, und wobei hierdurch Ausgangsdaten erzeugt werden, die eine Meldung des Automatisierungssystems repräsentieren, die der ersten Kategorie zugeordnet ist,
- die Meldung, die durch die Ausgangsdaten repräsentiert wird, auf einer zweiten Mensch-Maschine-Schnittstelle zur Anzeige gebracht wird, wobei die zweite Mensch-Maschine-Schnittstelle kommunikativ von dem Meldesystem getrennt ist.

Die Erfindung beruht im ersten Schritt auf der Erkenntnis, dass maschinelles Lernen nutzbringend zum einen für eine Filterung von Meldungen der ersten Kategorie aus der großen Menge der Meldungen (d.h. zumindest der Menge der Meldungen der zweiten Kategorie, optional zusätzlich auch der Meldungen der ersten Kategorie) eingesetzt werden. In diesem Fall repräsentieren die Ausgangsdaten eine der Meldungen, die innerhalb eines definierten Zeitraumes auch bereits von den Eingangsdaten repräsentiert wird. Zum anderen kann maschinelles Lernen für eine Vorhersage von Meldungen der ersten Kategorie auf Basis zumindest der Menge der Meldungen der zweiten Kategorie, optional zusätzlich auch der Meldungen der ersten Kategorie, genutzt werden. In diesem Fall repräsentieren die Ausgangsdaten in der Regel eine Meldung, die innerhalb eines definierten Zeitraumes noch nicht von den Eingangsdaten repräsentiert wird. Sie können aber auch eine Meldung repräsentieren, die innerhalb eines definierten Zeitraumes auch bereits von den Eingangsdaten repräsentiert wird. Mit Hilfe der gefilterten oder vorhergesagten Meldungen kann die Aufmerksamkeit von Personal auf die unter definierten oder definierbaren Kriterien wichtigen Meldungen gelenkt bzw. deren Auftreten sogar vorhergesagt werden.

Vorzugsweise umfassen die Ausgangsdaten im Fall einer Vorhersage einer Meldung einen Zeitpunkt oder einen Zeitraum für ein Auftreten der Meldung und eine Wahrscheinlichkeit für ein Auftreten der Meldung zu diesem Zeitpunkt oder in diesem Zeitraum.

Die unterschiedlichen Kategorien können vorzugsweise zum Ausdruck bringen, wie kritisch der jeweilige Typ von Meldung für die Ausfallsicherheit der Anlage ist. Die unterschiedlichen Kategorien können sich aber auch auf andere Aspekte wie z.B. Produktionskosten, Produktionsmenge, Produktionsqualität, Rohstoffverbrauch, Stromverbrauch, Emissionen, etc. beziehen.

Es ist dabei ein kontinuierliches maschinelles Training der Funktion unter Berücksichtigung aktueller Zustände der Anlage möglich. Hierdurch kann die Funktion und somit die Filterung und/oder Vorhersage von Meldungen kontinuierlich an Änderungen in der Anlage (z.B. aufgrund Verschleiß oder Änderungen in der Leistungsfähigkeit von Anlagenkomponenten, Änderungen in Qualitäten/Quantitäten der Rohmaterialien, Änderungen in der Betriebsweisen der Anlage) angepasst und somit eine hohe Qualität der Filterung und/oder Vorhersage erreicht werden.

Es ist dabei kein Eingriff in das Meldesystem vorgesehen und notwendig, sondern die Meldung, die durch die Ausgangsdaten repräsentiert wird, wird lediglich zusätzlich zu den Meldungen des Meldesystems zur Anzeige gebracht. Durch die Anzeige dieser Meldung auf der gesonderten, zusätzlichen zweiten Mensch-Maschine-Schnittstelle und die kommunikative Trennung der zweiten Mensch-Maschine-Schnittstelle von dem Meldesystem bzw. dem Automatisierungssystem können unerwünschte sicherheitsrelevante Rückwirkungen auf das Automatisierungssystem vermieden.

Die kommunikative Trennung kann besonders einfach dadurch realisiert werden, dass die Eingangsdaten der Funktion von einem Sender empfangen werden und die Ausgangsdaten von der Funktion an einen Empfänger bereitgestellt werden, der unterschiedlich zu dem Sender ist.

Die Funktion, die von einem Algorithmus aus dem Bereich des maschinellen Lernens trainiert wurde, kann bereitgestellt werden durch:
- Empfangen von Eingangs-Trainingsdaten, die Meldungen des Automatisierungssystems repräsentieren,
- Empfangen von Ausgangs-Trainingsdaten, die Meldungen des Automatisierungssystems repräsentieren, wobei die Ausgangs-Trainingsdaten mit den Eingangs-Trainingsdaten in einer Beziehung stehen,
- Trainieren der Funktion basierend auf den Eingangs-Trainingsdaten und den Ausgangs-Trainingsdaten.

Durch Training der Funktion basierend auf Trainingsdaten kann sich die Funktion an neue Umstände anpassen und Muster in den Meldungen identifizieren und extrapolieren. Parameter der Funktion können durch Training angepasst werden. Es kann dabei z.B. Supervised Training, Semi-supervised Training, Unsupervised Training, Reinforcement Learning und/oder aktives Training genutzt werden. Weiterhin kann Representation Learning (eine alternative Bezeichnung ist "Feature Learning") genutzt werden. Insbesondere können die Parameter der Funktion iterativ durch mehrere Trainingsschritte angepasst werden.

Die Funktion basiert vorzugsweise auf Cross Correlation von Meldungen, einem neuronalen Netz (vorzugsweise Long/Short Term Memory - LSTM) oder auf Association Rules. Vorzugsweise kommt eine Kombination dieser Verfahren zum Einsatz, wobei das Ergebnis z.B. durch die Summe der Ergebnisse aller Verfahren, durch Mehrheitsergebnisse, durch Einzelergebnisse etc. erhalten werden kann.

Gemäß einer weiteren vorteilhaften Ausgestaltung wird von der zweiten Mensch-Maschine-Schnittstelle eine Information über eine Qualität der Meldung, die durch die Ausgangsdaten repräsentiert wird, erfasst, und für das Trainieren der Funktion verwendet. Hierdurch kann die Funktion besonders schnell optimiert werden.

Weiterhin kann Personal der Einrichtung oder Anlage über die zweite Mensch-Maschine-Schnittstelle auch eine Auswahl aus mehreren vordefinierten Kategorisierungen angeboten werden und über die zweite Mensch-Maschine-Schnittstelle kann dann eine Information über die Auswahl erfasst werden. Mögliche Kategorisierungen können z.B. Ausfallsicherheit, Emissionen, Stromverbrauch, Produktionskosten, etc. sein.

Von Vorteil ist die Funktion entfernt von dem Meldesystem, insbesondere auf einem Cloud-basierten Rechnersystem, angeordnet. Dort können dann auch Trainingsdaten, die Meldungen anderer Automatisierungssysteme repräsentieren, erfasst und für das Training der Funktion genutzt werden. Hierdurch kann die Qualität der Funktion und somit der Ausgangsdaten erhöht werden.

Ein erfindungsgemäßes System zum Management von Meldungen eines Automatisierungssystems, insbesondere einer industriellen Anlage, wobei das Automatisierungssystem
- ein Meldesystem zur Erzeugung von Meldungen und
- zumindest eine erste Mensch-Maschine-Schnittstelle zur Anzeige der Meldungen umfasst,
- wobei das Meldesystem kommunikativ, insbesondere über ein Kommunikationsnetzwerk des Automatisierungssystems, mit der Mensch-Maschine-Schnittstelle verbunden ist,
   und wobei zumindest eine erste Kategorie und eine zweite Kategorie von Meldungen definiert sind und wobei die Meldungen des Automatisierungssystems jeweils zumindest einer der zwei Kategorien zugeordnet sind, umfasst
- eine Auswerteeinheit, die ausgebildet ist zum Anwenden einer Funktion zumindest auf Eingangsdaten, die auf der ersten Mensch-Maschine-Schnittstelle zur Anzeige gebracht werden und die Meldungen repräsentieren, die der zweiten Kategorie (optional zusätzlich auch solche der ersten Kategorie) zugeordnet sind, wobei die Funktion von einem Algorithmus aus dem Bereich des maschinellen Lernens trainiert wurde, und wobei hierdurch Ausgangsdaten erzeugt werden, die eine Meldung des Automatisierungssystems repräsentieren, die der ersten Kategorie zugeordnet ist,
- eine zweite Mensch-Maschine-Schnittstelle zur Anzeige der Meldung, die durch die Ausgangsdaten repräsentiert wird, wobei die zweite Mensch-Maschine-Schnittstelle kommunikativ von dem Meldesystem getrennt ist.

Von Vorteil umfasst das erfindungsgemäße System
- eine erste Schnittstelle, die ausgebildet ist zum Empfang der Eingangsdaten von einem Sender, und
- eine zweite Schnittstelle, die ausgebildet ist zum Bereitstellen der Ausgangsdaten an einen Empfänger, der unterschiedlich ist zu dem Sender.

Gemäß einer weiteren vorteilhaften Ausgestaltung umfasst das erfindungsgemäße System eine Trainingseinheit zur Bereitstellung der trainierten Funktion, umfassend
- eine erste Trainings-Schnittstelle, die ausgebildet ist zum Empfangen von Eingangs-Trainingsdaten, die Meldungen des Automatisierungssystems repräsentieren,
- eine zweite Trainings-Schnittstelle, die ausgebildet ist zum Empfangen von Ausgangs-Trainingsdaten, die Meldungen des Automatisierungssystems repräsentieren, wobei die Ausgangs-Trainingsdaten mit den Eingangs-Trainingsdaten in Beziehung stehen,
- eine Trainings-Recheneinheit, die ausgebildet ist zum Trainieren der Funktion basierend auf den Eingangs-Trainingsdaten und den Ausgangs-Trainingsdaten,
- eine dritte Trainings-Schnittstelle, die ausgebildet ist zum Bereitstellen der trainierten Funktion.

Gemäß einer weiteren vorteilhaften Ausgestaltung ist die zweite Mensch-Maschine-Schnittstelle ausgebildet zur Erfassung einer Information über eine Qualität der Meldung, die durch die Ausgangsdaten repräsentiert wird, und zur Übertragung dieser Information an die Trainingseinheit.

Von besonderem Vorteil ist die Auswerteeinheit, vorzugsweise auch die Trainingseinheit, entfernt von dem Meldesystem, insbesondere auf einem Cloud-basierten Rechnersystem, angeordnet.

Die für das erfindungsgemäße Verfahren und seine vorteilhaften Ausgestaltungen genannten Wirkungen und Vorteile gelten entsprechend für das erfindungsgemäße System und seine vorteilhaften Ausgestaltungen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Dabei sind einander entsprechende Teile mit jeweils gleichen Bezugszeichen versehen. Es zeigen:
FIG 1: in vereinfachter Darstellung einen prinzipiellen Aufbau eines erfindungsgemäßen Systems,
FIG 2: das Cloud-basierende Auswertesystem von FIG 1 in einer detaillierteren Darstellung
FIG 3: einen erfindungsgemäßen Verfahrensablauf

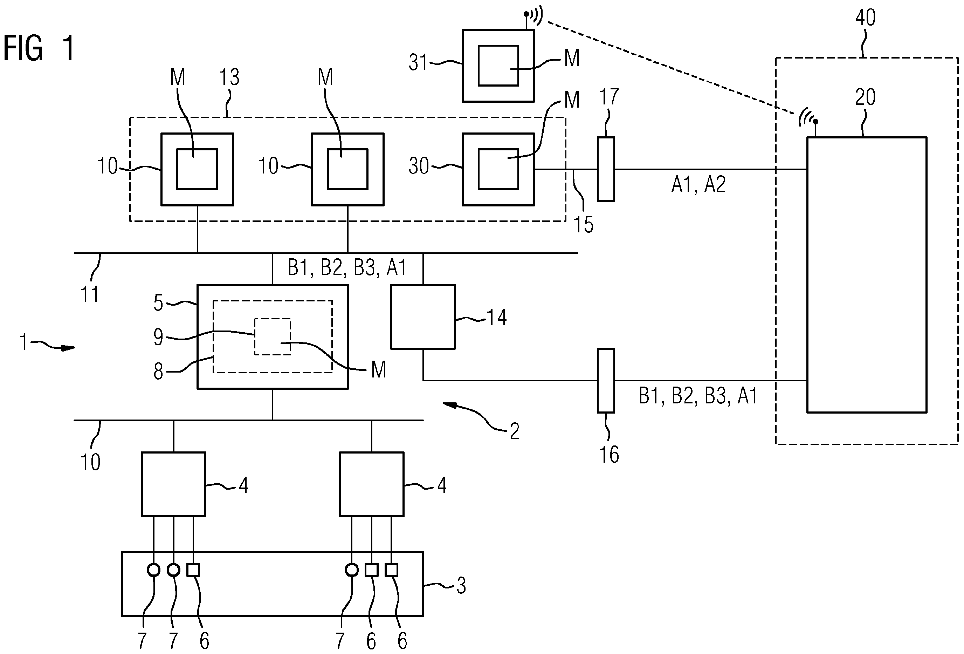

FIG 1 zeigt in vereinfachter Darstellung eine industrielle Anlage 1 mit einem Automatisierungssystem 2. Derartige Anlagen kommen in verschiedensten Industriesektoren zum Einsatz, zum Beispiel in der Energieerzeugung, der Prozess-Industrie (z.B. Papier, Chemie, Pharma, Metall, Öl- und Gas) und der diskreten Fertigungsindustrie. Der eigentliche branchenspezifische Prozess 3, z.B. ein Energieerzeugungs- oder Produktionsprozess, wird durch das Automatisierungssystem 2 gesteuert und/oder geregelt. Das Automatisierungssystem 2 umfasst hierzu eine oder mehrere industrielle Steuerungen (hier die Steuerungen 4) und zumindest einen Automatisierungs-Server 5.

Jede der Steuerungen 4 steuert dann den Betrieb jeweils eines Teilbereichs des Prozesses 3 in Abhängigkeit von dessen Betriebszuständen. Der Prozess 3 umfasst hierzu von den Steuerungen ansteuerbare Aktoren 6. Hierbei kann es sich um einzelne Aktoren (z.B. einen Motor, eine Pumpe, ein Ventil, ein Schalter), oder um Gruppen derartiger Aktoren oder um ganze Sektionen einer Anlage handeln. Weiterhin umfasst der Prozess Sensoren 7, die den Steuerungen 4 Istwerte von Prozessvariablen (z.B. Temperaturen, Drücke, Geschwindigkeiten) zur Verfügung stellen.

Ein Kommunikationsnetzwerk der Anlage 1 umfasst auf übergeordneter Ebene ein Anlagen- Netzwerk 11, über das der Automatisierungs-Server 5 mit Mensch-Maschinen-Schnittstellen (HMI) 10 in Kommunikation steht, und ein Steuerungs-Netzwerk 12 (häufig auch als "System-Netzwerk" bezeichnet), über das die Steuerungen 4 miteinander und mit dem Automatisierungs-Server 5 in Kommunikationsverbindung stehen. Die Verbindung der Steuerungen 4 mit den Aktoren 6 und Sensoren 7 kann über diskrete Signalleitungen 13 oder über einen Feldbus erfolgen. Die Mensch-Maschinen-Schnittstellen (HMI) 10 sind üblicherweise als Bedien- und Beobachtungsstation ausgebildet und in einer Leitwarte 13 der Anlage 1 angeordnet.

Bei dem Automatisierungs-Server 5 kann es sich zum Beispiel um einen sogenannten "Operator-System-Server" oder "Anwendungs-Server" (Application-Server) handeln, in dem ein oder mehrere anlagenspezifische Anwendungsprogramme 8 gespeichert sind und beim Betrieb der Anlage 1 zur Ausführung gebracht werden. Diese dienen beispielsweise dazu, in der Anlage 1 die Steuerungen 4 zu konfigurieren, Bediener-Aktivitäten an den Mensch-Maschine-Schnittstellen (HMI) 10 zu erfassen und auszuführen (z.B. Sollwerte von Prozessvariablen einzustellen oder zu ändern) oder Meldungen für Anlagenpersonal zu erzeugen und auf den Mensch-Maschine-Schnittstellen (HMI) 10 zur Anzeige zu bringen.

Das Automatisierungssystem 2 ohne die Feldgeräte (d.h. ohne Aktoren 5 und Sensoren 6) wird häufig auch als "Prozessleitsystem" bezeichnet.

Zur Erzeugung der Meldungen M umfasst der Automatisierungs-Server 5 ein Meldesystem 9, das hier ebenfalls durch die Anwendungsprogramme 8 realisiert wird.

Oftmals beziehen sich diese Meldungen M auf bestimmte Ereignisse in dem Automatisierungssystem 2. Eine Meldung kann beispielsweise eine Alarm-Meldung oder eine Hinweis-Meldung sein. Eine Alarm-Meldung ist eine Meldung, dass ein Fehler oder ein abnormales Ereignis eingetreten ist und das Personal zeitnah Maßnahmen einleiten muss. Eine Hinweis-Meldung kann beispielsweise auf eine Notwendigkeit einer Wartung hinweisen. Die Ereignis-Meldung kann dabei Text und weitere Informationen wie z.B. Zeitpunkt und Ort der Erzeugung der Meldung umfassen.

Zur Lenkung der Aufmerksamkeit des Personals auf die unter definierten bzw. definierbaren Kriterien wichtigen Meldungen bzw. zu deren Vorhersage umfasst das Automatisierungssystem zusätzlich einen Verbindungs-Server 14, ein Auswerte-System 20 und eine zusätzliche Mensch-Maschine-Schnittstelle 30, die vorzugsweise als Operator-Station ausgebildet ist. Alternativ oder ergänzend kann auch eine mobile Mensch-Maschine-Schnittstelle 31, z.B. ein Smartphone, Notebook oder Tablet vorhanden sein. Die Mensch-Maschine-Schnittstellen 30, 31 sind dabei vom dem Kommunikationsnetzwerk 11 getrennt, d.h. es ist keine Kommunikation von dem Kommunikationsnetzwerk 11 zu den Mensch-Maschine-Schnittstellen 30, 31 oder umgekehrt möglich. Insbesondere kann die Mensch-Maschine-Schnittstellen 30 über ein Office-Netzwerk 15 in Kommunikation mit dem Auswertesystem 20 stehen.

Zwischen dem Verbindungs-Server 14 und dem Auswerte-System 20 sowie zwischen dem Auswerte-System 20 und den Mensch-Maschine-Schnittstellen 30, 31 können noch Firewalls 16, 17 angeordnet sein.

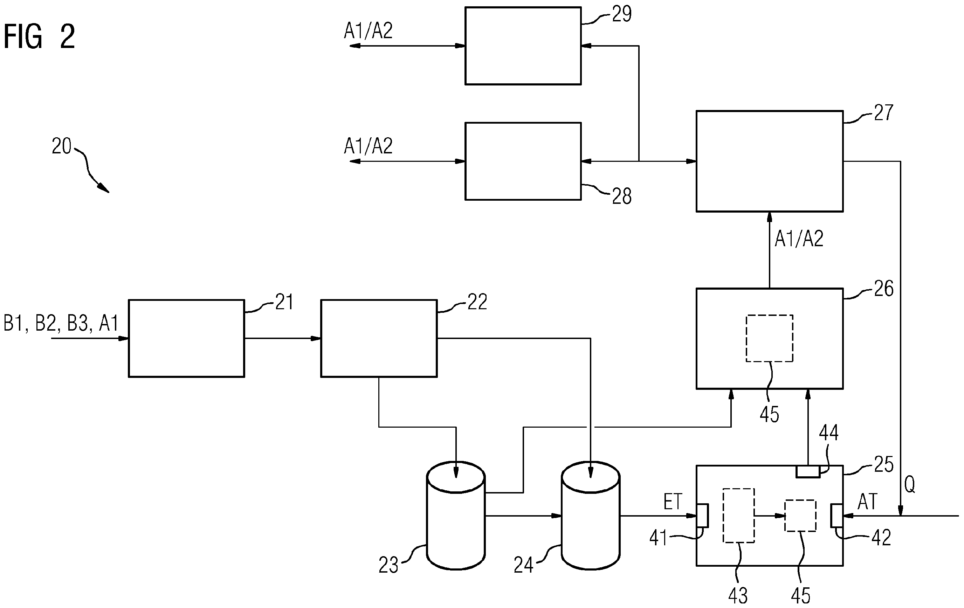

Wie im Detail in FIG 2 dargestellt, umfasst das cloudbasierende Auswertesystem 20 eine erste Kommunikationsschnittstelle in Form eines Cloud-Internet-Gateway 21, eine Datenstromverarbeitungseinheit 22, einen Speicher 23 für Istdaten (Echtzeitdaten), einen Speicher 24 für historische Daten, eine Trainingseinheit 25, eine Auswerteeinheit 26, eine Web-App 27, eine zweite Kommunikationsschnittstelle 28 für drahtgebundene Kommunikation und ergänzend oder alternativ eine weitere zweite Kommunikationsschnittstelle 29 für eine drahtlose Kommunikation.

In dem Meldesystem 9 sind zumindest eine erste Kategorie A und eine zweite Kategorie B von Meldungen definiert und die Meldungen des Automatisierungssystems sind jeweils zumindest einer der zwei Kategorien A, B zugeordnet.

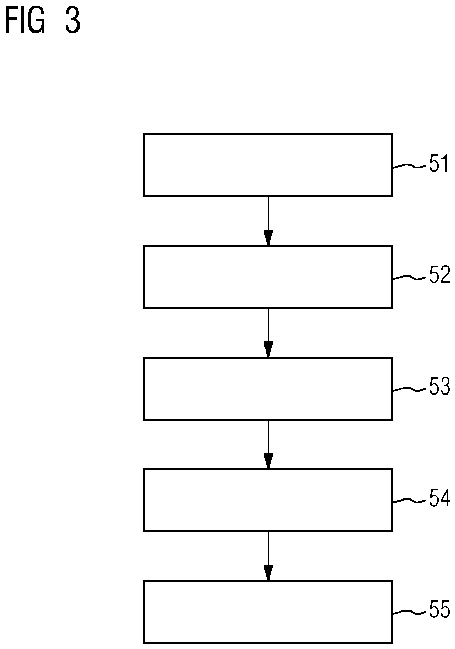

Beim Betrieb des Automatisierungssystems werden von dem Meldesystem 9 eine Vielzahl von Meldungen vom Typ B (deren Daten hier mit B1, B2, B3, etc. bezeichnet sind) und eine etwas geringere Anzahl vom Typ A (deren Daten hier mit A1, A2, etc. bezeichnet sind) erzeugt und über das Kommunikationsnetzwerk 11 auf den Mensch-Maschine-Schnittstellen 10 zur Anzeige gebracht (siehe Schritt 51 in FIG 3). Außerdem werden Daten, die diese Meldungen repräsentieren, über den Verbindungsserver 14 an das Auswertesystem 20 übertragen (siehe Schritt 52 in FIG 3). Das Cloud-Internet-Gateway 21 ist dabei ausgebildet zum Empfang dieser Daten von dem Verbindungsserver 14 als Sender.

Das Gateway 21 leitet diese Daten weiter an die Datenstromverarbeitungseinheit 22. Diese speichert diese zum einen für eine nachfolgende (nahezu) Echtzeitverarbeitung in dem Speieher 23 sowie für eine Archivierung an dem Speicher 24 ab (siehe Schritt 53 in FIG 3).

Die Daten in dem Speicher 23 werden ohne große Verzögerung als Eingangsdaten an die Auswerteeinheit 26 weitergeleitet.

Die Auswerteeinheit 26 ist ausgebildet zum Anwenden einer Funktion auf die Eingangsdaten, wobei die Funktion von einem Algorithmus aus dem Bereich des maschinellen Lernens trainiert wurde, und wobei hierdurch Ausgangsdaten erzeugt werden, die eine Meldung des Automatisierungssystems repräsentieren, die der ersten Kategorie A zugeordnet ist (siehe Schritt 54 in FIG 3).

Die durch maschinelles Lernen trainierte Funktion kann nutzbringend zum einen für eine Filterung von Meldungen der ersten Kategorie aus der Gesamtmenge aller Meldungen (d.h. Meldungen der ersten und zweiten Kategorie) eingesetzt werden. Hier ist dies beispielhaft die Meldung A1. In diesem Fall repräsentieren die Ausgangsdaten eine der Meldungen, die innerhalb eines definierten Zeitraumes auch bereits von den Eingangsdaten repräsentiert wird.

Zum anderen kann maschinelles Lernen für eine Vorhersage von Meldungen der ersten Kategorie auf Basis zumindest der Meldungen der zweiten Kategorie, optional zusätzlich auch der Meldungen der ersten Kategorie, genutzt werden. In diesem Fall repräsentieren die Ausgangsdaten in der Regel eine Meldung, die innerhalb eines definierten Zeitraumes noch nicht von den Eingangsdaten repräsentiert wird. Sie können aber auch eine Meldung repräsentieren, die innerhalb eines definierten Zeitraumes auch bereits von den Eingangsdaten repräsentiert wird. Hier ist dies beispielhaft die Meldung A2.

In beiden Fällen kann die Aufmerksamkeit von Personal auf die unter definierten Gesichtspunkten wichtigen Meldungen A1 bzw. A2 gelenkt bzw. deren Auftreten sogar vorhergesagt werden, um rechtzeitig Gegenmaßnahmen einzuleiten.

Die Ausgangsdaten A1 bzw. A2 werden über die Web-App 27 entweder über die Kommunikationsschnittstelle 28 an das Mensch-Maschine-Interface 30 und/oder über die Kommunikationsschnittstelle 29 an das Mensch-Maschine-Interface 31 übertragen und dort zur Anzeige gebracht (siehe Schritt 55 in FIG 3). Die Schnittstellen 28, 29 sind somit ausgebildet zum Bereitstellen der Ausgangsdaten an einen Empfänger, der unterschiedlich ist zu dem Sender der Eingangsdaten ist.

Die Meldung, die durch die Ausgangsdaten A1 bzw. A2 repräsentiert wird, wird somit zusätzlich zu allen anderen Meldungen des Meldesystems 9 in der Leitwarte 13 zur Anzeige gebracht. Durch die Anzeige dieser Meldung auf der gesonderten, zusätzlichen zweiten Mensch-Maschine-Schnittstelle 30, 31 wird die Aufmerksamkeit des Personals besonders auf diese Meldungen gelenkt. Durch die kommunikative Trennung der zweiten Mensch-Maschine-Schnittstelle 30, 31 von dem Meldesystem 9 bzw. dem Automatisierungssystem 2 können unerwünschte sicherheitsrelevante Rückwirkungen auf das Automatisierungssystem 2 vermieden werden. Es ist dabei auch kein Eingriff in das Meldesystem 9 vorgesehen und notwendig.

Zur Bereitstellung der trainierten Funktion umfasst das Auswertesystem die Trainingseinheit 25, die umfasst:
- eine erste Trainings-Schnittstelle 41, die ausgebildet ist zum Empfangen von Eingangs-Trainingsdaten ET, die Meldungen des Automatisierungssystems 2 repräsentieren,
- eine zweite Trainings-Schnittstelle 42, die ausgebildet ist zum Empfangen von Ausgangs-Trainingsdaten AT, die Meldungen des Automatisierungssystems 2 repräsentieren, wobei die Ausgangs-Trainingsdaten mit den Eingangs-Trainingsdaten ET in Beziehung stehen,
- eine Trainings-Recheneinheit 43, die ausgebildet ist zum Trainieren der Funktion 45 basierend auf den Eingangs-Trainingsdaten ET und den Ausgangs-Trainingsdaten AT,
- eine dritte Trainings-Schnittstelle_44, die ausgebildet ist zum Bereitstellen der trainierten Funktion 45 für die Auswerteeinheit 26.

Die Eingangs-Trainingsdaten ET werden hierbei vom dem Datenspeicher 24 empfangen. Die Ausgangs-Trainingsdaten AT werden von Experten empfangen. Das Trainieren der Funktion 45 basiert auf den Eingangs-Trainingsdaten ET und den Ausgangs-Trainingsdaten AT.

In dem Speicher 24 könne auch Trainingsdaten, die Meldungen anderer Automatisierungssysteme repräsentieren, erfasst und für das Training der Funktion 45 genutzt werden. Hierdurch kann die Qualität der Funktion 45 und somit der Ausgangsdaten erhöht werden.

Durch Training der Funktion 45 basierend auf Trainingsdaten kann sich die Funktion an neue Umstände anpassen und Muster in den Meldungsfolgen identifizieren und extrapolieren. Parameter der Funktion können durch Training angepasst werden. Es kann dabei z.B. Supervised Training, Semi-supervised Training, Unsupervised Training, Reinforcement Learning und/oder aktives Training genutzt werden. Weiterhin kann Representation Learning (eine alternative Bezeichnung ist "Feature Learning") genutzt werden. Insbesondere können die Parameter der Funktion iterative durch mehrere Trainingsschritte angepasst werden.

Die Funktion 45 basiert vorzugsweise auf Cross Correlation von Meldungen, einem neuronalen Netz (vorzugsweise Long/Short Term Memory - LSTM) oder auf Association Rules. Vorzugsweise kommt eine Kombination dieser Verfahren zum Einsatz, wobei das Ergebnis z.B. durch die Summe der Ergebnisse aller Verfahren, durch Mehrheitsergebnisse, durch Einzelergebnisse etc. erhalten werden kann.

Von der zweiten Mensch-Maschine-Schnittstelle 30 oder 31 kann auch eine Information Q von Personal der Anlage über eine Qualität der Meldung, die durch die Ausgangsdaten repräsentiert wird, erfasst, und an das Auswertesystem 20 übertragen und dort für das Trainieren der Funktion 45 verwendet werden. Hierdurch kann die Funktion 45 besonders schnell optimiert werden. Die Information Q kann sich z.B. darauf beziehen, ob eine vorhergesagt Meldung überhaupt eingetreten ist, und im Falle des Eintritts, ob die angegebene Zeit oder der Zeitraum für deren Eintritt korrekt vorhergesagt wurde.

Vorzugsweise umfassen die Ausgangsdaten im Fall einer Vorhersage einer Meldung, die durch die Ausgangsdaten A2 repräsentiert wird, einen Zeitpunkt oder einen Zeitraum für ein Auftreten der Meldung und eine Wahrscheinlichkeit für ein Auftreten der Meldung zu diesem Zeitpunkt oder in diesem Zeitraum.

Die unterschiedlichen Kategorien können vorzugsweise zum Ausdruck bringen, wie kritisch der jeweilige Typ von Meldung für die Ausfallsicherheit der Anlage ist. Die unterschiedlichen Kategorien können sich aber auch auf andere Aspekte wie z.B. Produktionskosten, Produktionsmenge, Produktionsqualität Rohstoffverbrauch, Stromverbrauch, Emissionen, etc. beziehen.

Von Vorteil wird Personal der Anlage 1 über die zweite Mensch-Maschine-Schnittstelle 30 eine Auswahl aus mehreren vordefinierten Kategorisierungen angeboten und über die zweite Mensch-Maschine-Schnittstelle 30 kann dann eine Information über die Auswahl erfasst werden.

## Patentansprüche

1. Verfahren zum Management von Meldungen (M) eines Automatisierungssystems (2), insbesondere einer industriellen Anlage (1), wobei das Automatisierungssystem (2)
- ein Meldesystem (9) zur Erzeugung von Meldungen (M) und
- zumindest eine erste Mensch-Maschine-Schnittstelle (10) umfasst, auf der die Meldungen (M) zur Anzeige gebracht werden, und wobei
- das Meldesystem (9) kommunikativ, insbesondere über ein Kommunikationsnetzwerk (11) des Automatisierungssystems (2), mit der Mensch-Maschine-Schnittstelle (10) verbunden ist,
- zumindest eine erste Kategorie (A) und eine zweite Kategorie (B) von Meldungen definiert sind und wobei die Meldungen (2) des Automatisierungssystems (2) jeweils zumindest einer der zwei Kategorien (A, B) zugeordnet sind,
- eine Funktion (45) angewendet wird zumindest auf Eingangsdaten (B1, B2, B3, A1), die Meldungen (M) repräsentieren, die der zweiten Kategorie (B) zugeordnet sind und die auf der ersten Mensch-Maschine-Schnittstelle (10) zur Anzeige gebracht werden, wobei die Funktion (45) von einem Algorithmus aus dem Bereich des maschinellen Lernens trainiert wurde, und wobei hierdurch Ausgangsdaten (A1 bzw. A2) erzeugt werden, die eine Meldung (M) des Automatisierungssystems (2) repräsentieren, die der ersten Kategorie (A) zugeordnet ist,
- die Meldung (M), die durch die Ausgangsdaten (A1 bzw. A2) repräsentiert wird, auf einer zweiten Mensch-Maschine-Schnittstelle (30) zur Anzeige gebracht wird, wobei die zweite Mensch-Maschine-Schnittstelle (30) kommunikativ von dem Meldesystem (9) getrennt ist.

2. Verfahren nach Anspruch 1, wobei die Eingangsdaten (B1, B2, B3, A1) der Funktion (45) von einem Sender (14) empfangen werden und wobei die Ausgangsdaten (A1 bzw. A2) der Funktion (45) an einen Empfänger (30) gesendet werden, der unterschiedlich zu dem Sender (14) ist.

3. Verfahren nach Anspruch 1 oder 2, wobei die Funktion (45), die von einem Algorithmus aus dem Bereich des maschinellen Lernens trainiert wurde, bereitgestellt wird durch:
- Empfangen von Eingangs-Trainingsdaten (ET), die Meldungen des Automatisierungssystems (2) repräsentieren,
- Empfangen von Ausgangs-Trainingsdaten (AT), die Meldungen des Automatisierungssystems repräsentieren, wobei die Ausgangs-Trainingsdaten (AT) mit den Eingangs-Trainingsdaten (ET) in einer Beziehung stehen,
- Trainieren der Funktion (45) basierend auf den Eingangs-Trainingsdaten und den Ausgangs-Trainingsdaten.

4. Verfahren nach Anspruch 1, 2 oder 3, wobei von der zweiten Mensch-Maschine-Schnittstelle (30) eine Information (Q) über eine Qualität der Meldung, die durch die Ausgangsdaten (A1 bzw. A2) repräsentiert wird, erfasst wird, und für das Trainieren der Funktion (45) verwendet wird.

5. Verfahren nach einem der vorhergehenden Ansprüche, wobei die Funktion (45) entfernt von dem Meldesystem (9), insbesondere auf einem Cloud-basierten Rechnersystem (40), angeordnet ist.

6. Auswerte-Verfahren zum Management von Meldungen (M) eines Automatisierungssystems (2), insbesondere einer industriellen Anlage (1), wobei zumindest eine erste Kategorie (A) und eine zweite Kategorie (B) von Meldungen (M) definiert sind und wobei die Meldungen (M) des Automatisierungssystems (2) jeweils zumindest einer der zwei Kategorien (A, B) zugeordnet sind, umfassend
- Empfangen von Eingangsdaten (B1, B2, B3, A1) von einem Sender (14), wobei die Eingangsdaten zumindest Meldungen (M) repräsentieren, die der zweiten Kategorie (A, B) zugeordnet sind,
- Anwenden einer Funktion (45), die von einem Algorithmus aus dem Bereich des maschinellen Lernens trainiert wurde, auf die Eingangsdaten (B1, B2, B3, A1), wobei hierdurch Ausgangsdaten (A1 bzw. A2) erzeugt werden, die eine Meldung (M) des Automatisierungssystems (2) repräsentieren, die der ersten Kategorie (A) zugeordnet ist,
- Bereitstellen der Ausgangsdaten (A1 bzw. A2) an einen Empfänger (30), wobei der Empfänger (30) unterschiedlich ist zu dem Sender (14) .

7. Verfahren nach Anspruch 6, wobei die Funktion (45), die von einem Algorithmus aus dem Bereich des maschinellen Lernens trainiert wurde, bereitgestellt wird durch:
- Empfangen von Eingangs-Trainingsdaten (ET), die Meldungen (M) des Automatisierungssystems (2) repräsentieren,
- Empfangen von Ausgangs-Trainingsdaten (AT), die Meldungen (M) des Automatisierungssystems repräsentieren, wobei die Ausgangs-Trainingsdaten (AT) mit den Eingangs-Trainingsdaten (ET) in einer Beziehung stehen,
- Trainieren der Funktion (45) basierend auf den Eingangs-Trainingsdaten (ET) und den Ausgangs-Trainingsdaten (AT).

8. System zum Management von Meldungen (M) eines Automatisierungssystems (2), insbesondere einer industriellen Anlage (1), wobei das Automatisierungssystem (2)
- ein Meldesystem (9) zur Erzeugung von Meldungen (M) und
- zumindest eine erste Mensch-Maschine-Schnittstelle (10) zur Anzeige der Meldungen (M) umfasst,
- wobei das Meldesystem (9) kommunikativ, insbesondere über ein Kommunikationsnetzwerk (11) des Automatisierungssystems (2), mit der ersten Mensch-Maschine-Schnittstelle (10) verbunden ist,
und wobei zumindest eine erste Kategorie (A) und eine zweite Kategorie (B) von Meldungen (M) definiert sind und wobei die Meldungen (M) des Automatisierungssystems (2) jeweils zumindest einer der zwei Kategorien (A, B) zugeordnet sind, **gekennzeichnet durch**
- eine Auswerteeinheit (26), die ausgebildet ist zum Anwenden einer Funktion (45) zumindest auf Eingangsdaten (B1, B2, B3, A1), die auf der ersten Mensch-Maschine-Schnittstelle (10) zur Anzeige gebracht werden und die Meldungen (M) repräsentieren, die der zweiten Kategorie (A, B) zugeordnet sind, wobei die Funktion (45) von einem Algorithmus aus dem Bereich des maschinellen Lernens trainiert wurde, und wobei hierdurch Ausgangsdaten (A1 bzw. A2) erzeugt werden, die eine Meldung (M) des Automatisierungssystems (2) repräsentieren, die der ersten Kategorie (A) zugeordnet ist,
- eine zweite Mensch-Maschine-Schnittstelle (30) zur Anzeige der Meldung (M), die durch die Ausgangsdaten (A1 bzw. A2) repräsentiert wird, wobei die zweite Mensch-Maschine-Schnittstelle (30) kommunikativ von dem Meldesystem (9) getrennt ist.

9. System nach Anspruch 8, umfassend
- eine erste Schnittstelle (21), die ausgebildet ist zum Empfang der Eingangsdaten (B1, B2, B3, A1) von einem Sender (14),
- eine zweite Schnittstelle (28), die ausgebildet ist zum Bereitstellen der Ausgangsdaten (A1 bzw. A2) an einen Empfänger (30), der unterschiedlich ist zu dem Sender (14),

10. System nach Anspruch 8 oder 9, mit einer Trainingseinheit (25) zur Bereitstellung der trainierten Funktion (45), umfassend
- eine erste Trainings-Schnittstelle (41), die ausgebildet ist zum Empfangen von Eingangs-Trainingsdaten (ET), die Meldungen (M) des Automatisierungssystems (2) repräsentieren,
- eine zweite Trainings-Schnittstelle (42), die ausgebildet ist zum Empfangen von Ausgangs-Trainingsdaten (AT), die Meldungen (M) des Automatisierungssystems (2) repräsentieren, wobei die Ausgangs-Trainingsdaten (AT) mit den Eingangs-Trainingsdaten (ET) in Beziehung stehen,
- eine Trainings-Recheneinheit (43), die ausgebildet ist zum Trainieren der Funktion (45) basierend auf den Eingangs-Trainingsdaten (ET) und den Ausgangs-Trainingsdaten (AT),
- eine dritte Trainings-Schnittstelle (44), die ausgebildet ist zum Bereitstellen der trainierten Funktion (45).

11. System nach einem der Ansprüche 8 bis 10, wobei die zweite Mensch-Maschine-Schnittstelle (30) ausgebildet ist zur Erfassung einer Information (Q) über eine Qualität der Meldung (M), die durch die Ausgangsdaten (A1 bzw. A2) repräsentiert wird, und zur Übertragung dieser Information an die Trainingseinheit (25).

12. System nach einem der Ansprüche 8 bis 11, wobei die Auswerteeinheit (26), vorzugsweise auch die Trainingseinheit (25), entfernt von dem Meldesystem (9), insbesondere auf einem Cloud-basierten Rechnersystem (40), angeordnet ist.

13. Auswerte-System (20) zum Management von Meldungen (M) eines Automatisierungssystems (2),
wobei zumindest eine erste Kategorie (A) und eine zweite Kategorie (B) von Meldungen definiert sind und wobei die Meldungen (M) des Automatisierungssystems (2) jeweils zumindest einer der zwei Kategorien (A, B) zugeordnet sind, **gekennzeichnet durch**
- eine Auswerteeinheit (26), die ausgebildet ist zum Anwenden einer Funktion (45) zumindest auf Eingangsdaten (B1, B2, B3, A1), die Meldungen repräsentieren, die der zweiten Kategorie (A, B) zugeordnet sind, wobei die Funktion (45) von einem Algorithmus aus dem Bereich des maschinellen Lernens trainiert wurde, und wobei hierdurch Ausgangsdaten (A1 bzw. A2) erzeugt werden, die eine Meldung (M) des Automatisierungssystems (2) repräsentieren, die der ersten Kategorie (A) zugeordnet ist,
- mit einer ersten Schnittstelle (21), die ausgebildet ist zum Empfang der Eingangsdaten (B1, B2, B3, A1) von einem Sender (14),
- mit einer zweiten Schnittstelle (28), die ausgebildet ist zum Bereitstellen der Ausgangsdaten (A1 bzw. A2) an einen Empfänger (30), wobei der Sender (14) unterschiedlich ist zu dem Empfänger.

14. System nach Anspruch 13, mit einer Trainingseinheit (25) zur Bereitstellung der trainierten Funktion (45), umfassend
- eine erste Trainings-Schnittstelle (41), die ausgebildet ist zum Empfangen von Eingangs-Trainingsdaten (ET), die Meldungen (M) des Automatisierungssystems (2) repräsentieren,
- eine zweite Trainings-Schnittstelle (42), die ausgebildet ist zum Empfangen von Ausgangs-Trainingsdaten (AT), die Meldungen (M) des Automatisierungssystems (2) repräsentieren, wobei die Ausgangs-Trainingsdaten (AT) mit den Eingangs-Trainingsdaten (ET) in Beziehung stehen,
- eine Trainings-Recheneinheit (43), die ausgebildet ist zum Trainieren der Funktion (45) basierend auf den Eingangs-Trainingsdaten (ET) und den Ausgangs-Trainingsdaten (AT),
- eine dritte Trainings-Schnittstelle (44), die ausgebildet ist zum Bereitstellen der trainierten Funktion (45).

15. Computer-Programm umfassend Anweisungen die, wenn das Programm auf einem Computer ausgeführt wird, den Computer veranlassen, das Verfahren nach Anspruch 6 oder 7 auszuführen.

16. Computer-lesbares Medium umfassend Anweisungen die, wenn auf einem Computer zur Ausführung gebracht, den Computer veranlassen, das Verfahren nach Anspruch 6 oder 7 auszuführen.
